# EUROPEAN PATENT SPECIFICATION

(11) **EP 3 157 003 B1**
(45) Date of publication and mention of the grant of the patent: **31.10.2018**
(21) Application number: 14894647.8
(22) Date of filing: 22.08.2014
(51) Int. Cl.: G10L 15/22, G10L 15/08, G10L 25/78, G10L 17/02

(54) **TERMINAL CONTROL METHOD AND DEVICE, VOICE CONTROL DEVICE AND TERMINAL**
ENDGERÄTESTEUERUNGSVERFAHREN UND -VORRICHTUNG, SPRACHSTEUERUNGSVORRICHTUNG UND ENDGERÄT
PROCÉDÉ ET DISPOSITIF DE COMMANDE DE TERMINAL, DISPOSITIF DE COMMANDE VOCALE ET TERMINAL

(30) Priority: 11.06.2014 CN 201410256788
(43) Date of publication of application: 19.04.2017
(73) Proprietor: ZTE Corporation, Shenzhen, Guangdong 518057 (CN)
(72) Inventor: JIANG, Zhifeng, Shenzhen Guangdong 518057 (CN)
(74) Representative: Potter Clarkson LLP
(86) International application number: PCT/CN2014/085066
(87) International publication number: WO 2015/188459

(56) References cited:
- EP-A1- 2 728 894
- EP-A2- 2 669 889
- WO-A1-2013/125916
- CN-A- 103 187 051
- CN-A- 103 543 814
- CN-A- 103 760 969
- CN-U- 202 584 717
- US-A1- 2014 149 122
- US-B1- 8 060 366

## Description

### TECHNICAL FIELD

The present disclosure relates to the field of terminal control, and more particularly, to a terminal control method and device, a voice control device and a terminal.

### BACKGROUND

With the enhancement of the processing capacity of intelligent terminals, requirement of the user for the intelligent terminals also becomes higher. For example, in order to liberate the user's hands, the prior art provides a wide variety of voice recognition and control technologies, such as voice input of Baidu or Google, voice recognition of IFLYTEK and Siri of Apple, these applications bring better convenience to the user, liberate the user's hands without typing input, and also bring great entertainment, and their local or Internet cloud computing-based intelligent voice recognition can provide interactive effects.

Existing voice system improves user experience, while there is such a problem: the user first needs to hold a voice button and enter the voice system, and then issues a voice command. Of course, if a mobile phone is turned off, the user first needs to waken up the mobile phone, and then presses the voice button for the voice system. For example, under the use of existing products, when the user wants to check the weather when the mobile phone is turned off, the user needs to first pick up the mobile phone and unlock it, activates a main operating system, presses the voice button to enable the voice system such as Siri, and the voice command "check the weather" may be issued after the voice system is enabled, thus the steps are more complicated.

Therefore, how to provide a terminal control technique which can reduce the operation complexity of the user is a technical problem to be solved by a person skilled in the art. EP 2669889A2 discloses an apparatus and method for executing a voice command in an electronic device. A voice signal is detected and speech thereof is recognized. When the recognized speech contains a wakeup command, a voice command mode is activated, and a signal containing at least a portion of the detected voice signal is transmitted to a server. The server generates a control signal or a result signal corresponding to the voice command, and transmits the same to the electronic device. The device receives and processes the control or result signal, and awakens.

### SUMMARY

The invention comprises a terminal method according to claim 1 and a voice control device according to claim 6.

The embodiments of the present disclosure have the following advantageous effects.

According to the method provided by the embodiment of the present disclosure, when the terminal main voice system is off, the user voice including at least one voice segment is continuously monitored, and each voice segment in the user voice is detected in sequence. When the voice segment having the enable attribute is detected, an enable signal is sent to the terminal main voice system, and the voice segment monitored after the voice segment having the enable attribute is stored concurrently. After the terminal main voice system is woken up, the stored voice segment is transmitted. That is, when detecting that the terminal main voice system is off, voice detection is performed to determine whether it is necessary to enable the terminal main voice system. If it is determined as necessary, the enable signal is sent, and enabling the terminal main voice system by the voice is achieved, meanwhile, the subsequent voice segment is concurrently stored after the enable signal is sent, thus the user can issue the voice command continuously without waiting for the terminal main voice system to be enabled. Further, there is no need to worry that the terminal main voice system cannot be available by the voice command, thereby solving the complicated operation problem of the voice control technology in the prior art, and enhancing the user experience.

### BRIEF DESCRIPTION OF THE DRAWINGS

Fig. 1 is a flowchart showing a terminal control method provided by a first embodiment of the present disclosure;
Fig. 2 is a schematic view showing functional modules of a terminal control device provided by a second embodiment of the present disclosure;
Fig. 3 is a schematic view showing functional modules of a voice control device provided by a third embodiment of the present disclosure; and
Fig. 4 is a flowchart showing a terminal control method provided by a fourth embodiment of the present disclosure.

### DETAILED DESCRIPTION

The present disclosure will now be further explained through the detailed description taken in conjunction with the accompanying drawings.

The concept of the present disclosure is as follows. When the terminal main voice system is off, the user voice including at least one voice segment is continuously monitored, and each voice segment in the user voice is detected in sequence. When the voice segment having the enable attribute is detected, an enable signal is sent to the terminal main voice system, and the voice segment monitored after the voice segment having the enable attribute is stored concurrently. When the terminal main voice system is woken up, the stored voice segment is transmitted to the terminal main voice system. That is, when detecting that the terminal main voice system is off, voice detection is performed to determine whether it is necessary to enable the terminal main voice system. If it is determined as necessary, the enable signal is sent, and enablement of the terminal main voice system by the voice is achieved, meanwhile, the subsequent voice segment is concurrently stored after the enable signal is sent, thus the user can issue the voice command continuously without waiting for the terminal main voice system to be enabled. Further, there is no need to worry that the terminal main voice system cannot be obtained by the voice command.

### First embodiment

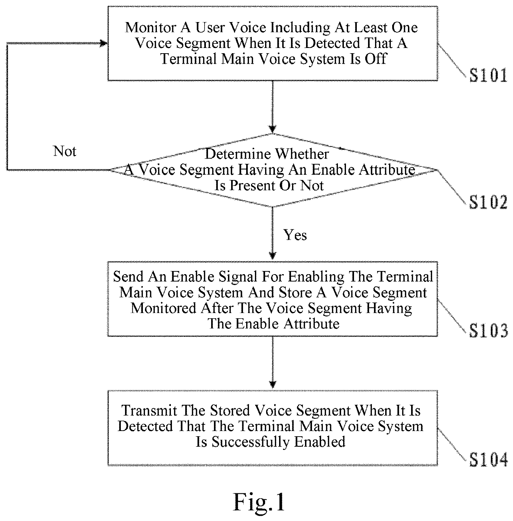

Fig. 1 is a flowchart showing a terminal control method provided by a first embodiment of the present disclosure. In this embodiment, as shown in Fig. 1, the terminal control method provided by the present disclosure includes the following steps.
S101: monitoring a user voice including at least one voice segment when it is detected that a terminal main voice system is off.

This step can collect voice segments by a voice collection device such as a microphone in the terminal, and step S102 is performed for each voice segment collected.

The terminal main voice system mentioned in the present disclosure refers to a voice system in an intelligent device such as an existing mobile phone, such as a Siri application in an Apple mobile phone. Such voice system is generally in a closed state when the user is not in use, and is started by pressing a voice button by the user when it is needed by the user. The shutdown of the main voice system includes two cases: the voice application is withdrawn when the main operating system is not sleeping; and the voice application is definitely closed when the main operating system is sleeping. The terminal main operating system mentioned in the present disclosure refers to the main operating system of the terminal such as mobile phone, such as IOS system, Android system, or the like. Such main operating system has large power consumption when being in an active state, thus such terminal main operating system is sleeping when the user does not use mobile phones.

The function of detecting whether the terminal main voice system is off may be that: the terminal control device provided by the present disclosure detects in real time whether the main voice system is closed or first detects whether the main operating system is sleeping (if so, the main voice system is definitely off, and if not, further detects whether the main voice system is closed); or accordingly may be that: when the main voice system is closed or the main operating system is sleeping, a signal is actively sent to inform the terminal control device its state.

The voice segment mentioned in the present disclosure refers to a segment formed by two natural pauses when the user speaks. For example, if the user says "Hello little 5, please check the weather", then the natural pause between "Hello little 5" and "please check the weather" is greater than the time interval between the bytes, and the time interval may be distinguishable by the terminal, and thus a redundant description is not provided in the present disclosure. While "Hello little 5" and "please check the weather" are two voice segments, and the user voice is formed by connecting at least one voice segment said by the user.
S102: determining whether a voice segment having an enable attribute is present or not; if present, step S103 is performed; and if not, the step S101 proceeds to be performed.

In some embodiments, the step S102 may be implemented by a DSP chip and an in-chip program newly added to a terminal such as a mobile phone or by a CPU and a main operating system of a mobile phone.

In some embodiments, the step 102 may particularly include: sequentially obtaining a content characteristic parameter of each voice segment in the monitored user voice, and matching the content characteristic parameter with a preset enable parameter, the content characteristic parameter being used for identifying a content of a voice segment; if the content characteristic parameter of the voice segment matches the preset enable parameter, the voice segment has the enable attribute. In particular, in this embodiment, the content characteristic parameter refers to the characteristic parameter related to the content of the voice segment, such as the content of the voice segment (which requires an analog-to-digital conversion), the length of the voice segment (a duration, which does not require an analog-to-digital conversion), an envelope of the voice segment (different voice contents, once uttered, correspond to different envelopes, that is, there is a correspondence between the envelope feature and the content, while the obtained envelopes also require an analog-digital conversion) and so on. The preset enable parameter may be a text content specified/input by the user, may also be a specific length specified by the user (the voice segment that meets such length may enable the terminal main voice system), or may naturally be a paragraph said by the user, wherein an envelope of the paragraph is used as the enable parameter, and so on. The matching or match mentioned in this embodiment may be set to be identical to reduce an error in operation, or a threshold may also be set such that the voice segment with a similarity greater than the threshold may be used as the voice segment satisfying the condition for enabling the terminal main voice system, and thus different application environments may be compatible. For example, when the user is in a different state/scene, the pronunciation length for the same control voice "Hello little 5" varies, for example, in the morning (the user' brain may be not clear and respond slowly), the time used by the user may be 1.2 seconds, while at noon (the user's brain is awake and responds fast), the time used by the user may be 0.95 seconds. Assuming that the voice segment in the preset enable parameter set by the user is 1 second in length and the threshold is 90%, the voice segment of "Hello little 5" said by the user in the morning has a length similarity of (1.2-1)/1=80%, which is obviously less than the threshold, and it is determined that "Hello little 5" said by the user in the morning does not have the enable attribute. Similarly, the voice segment of "Hello little 5" said by the user at noon has a length similarity of 0.95/1=95%, which is obviously greater than the threshold, and it is determined that "Hello little 5" said by the user at noon has the enable attribute. In the present embodiment, the length of a voice segment is exemplified, and the envelope, content, and the like of the voice segment can similarly have such type of matching mechanism.

In some embodiments, in order to prevent the terminal from being used by ineligible users, before the terminal main voice system is enabled, the method further includes: obtaining an identification parameter of each voice segment, and comparing the identification parameter with an identification parameter of a preset valid user, the identification parameter being used for identifying an identity of a speaker of a voice segment; and sending the enable signal to the terminal main voice system and storing the voice segment monitored after the voice segment having the enable attribute, only when the content characteristic parameter is matched and the compared identification parameter is valid. In particular, in the present embodiment, the identification parameter may be a characteristic parameter of the voice segment that is related only to the speaker's own pronunciation and not related to the speech content, such as voiceprint, frequency or the like of the voice segment, and accordingly, the identification parameter of the preset valid user is the voiceprint, the frequency, etc. when the terminal owner or valid user speaks. The present embodiment recognizes the identity of the speaker of the voice segment, and prevents the terminal from being used illegally.

The matching of content characteristic parameter and the comparison of the identification parameter that may be involved in this step are not sequential, and the detection of the voice segment may be implemented by selecting one or two parameters as required.
S103: sending an enable signal for enabling the terminal main voice system and storing a voice segment monitored after the voice segment having the enable attribute.

The sending of the enable signal and the storing of the subsequent voice segment that may be involved in this step are two parallel processes, thereby avoiding the problems such as the loss of the voice segment or incomplete reception for the voice segment in the process of enabling the terminal main voice system.
S104: transmitting the stored voice segment when it is detected that the terminal main voice system is successfully enabled.

In some embodiments, corresponding to detecting whether the main voice system is off, the function of detecting whether the terminal main voice system is successfully enabled may be as follows. The terminal control device provided in the present disclosure sends the enable signal when the main operating system is not sleeping, and detects in real time whether the main voice system is successfully enabled. Alternatively, when the main operating system is sleeping, the sent enable signal also has the function of wakening up the main operating system, and after the enable signal is sent, a real-time detection may be performed to determine whether the main operating system is woken up. If it is woken up, a further detection is performed to determine whether the main voice system is enabled. Accordingly, the function may be as follows. The main voice system, once enabled, actively send a signal to inform the terminal control device that it has been successfully enabled, or the main voice system/the main operating system, once enabled/woken up, actively detects whether the terminal control device has stored the voice segment, and when the terminal control device receives a corresponding instruction, it is considered that the main voice system is enabled successfully.

In the present embodiment, the enablement of the terminal main voice system and the storing of the subsequent voice segment are executed concurrently, thereby avoiding the loss of the voice segment or incomplete reception for the voice segment in the process of enabling the terminal main voice system. Thus the terminal main voice system, once enabled, may obtain the complete voice segment for processing, and there may be no the problems such as wrong implementation results caused by the wrong voice segment.

In some embodiments, before storing the voice segment monitored after the voice segment having the enable attribute in step S103, the method further includes: storing the voice segment having the enable attribute, such that the loss of the control instruction is avoided when a certain voice segment has both the enable attribute and the control attribute. The control attribute refers to that the terminal needs to complete an operation according to a certain voice segment, such as the voice segment of "little 5 check weather" has both the enable attribute (enabling the main voice system) and the control attribute (check weather), and if it is only used as the enable instruction, the loss of the control instruction will be caused.

In some embodiments, before storing the voice segment having the enable attribute in the above embodiment, the method further includes: determining whether the voice segment having the enable attribute has a control attribute, and storing the voice segment having the enable attribute if yes. In the present embodiment, before storing the voice segment having the enable attribute, it is determined whether it has a control attribute at the same time, which avoids storing the voice segment that does not having the control attribute and reduces the amount of data storage.

In some embodiments, the above embodiment further includes: when it is detected that the terminal main voice system is successfully enabled, determining whether the voice segment is being stored; if yes, continuing to store the voice segment, and after the voice segment is interrupted, terminating the storage of the subsequent voice segment; and if not, terminating the storage of the subsequent voice segment; transmitting the subsequent voice segment and the stored voice segment to the terminal main voice system after the storage of the subsequent voice segment is terminated. For example, if the user voice to be said by the user is "Hello little 5, help me check traffic, I want to eat", and the terminal main voice system is successfully enabled, the voice segment of "help me check traffic" is being stored (for example, "help" is being stored), and then "help me check traffic" continues to be stored. When the storage ends, the storage of the subsequent voice segment "I want to eat" is terminated, which may be received and processed by the enabled terminal main voice system such as Siri. When the terminal main voice system is enabled, the storage of "help me check traffic" is finished, and the storage of "I want to eat" has not yet started, the storage of the subsequent voice segment of "I want to eat" is directly terminated, which may be received and processed by the enabled terminal main voice system such as Siri. In the present embodiment, a specific scheme is provided for whether or not to store the voice segment when/after the terminal main voice system is enabled.

In some embodiments, if the subsequent voice segment and/or the stored voice segment includes a plurality of voice segments, the terminal main voice system sequentially processes the plurality of voice segments or sequentially transmits the plurality of voice segments to a network side in accordance with the monitoring sequence of each voice segment. For example, the user wants to call xxx to eat together, and the user voice is "Hello little 5, please call xxx to eat at 6:00 pm in xxx restaurant", then "Hello little 5" in such user voice is used to enable the terminal main voice system, and when "Hello little 5" is detected, an enable signal is sent to the main voice system, and "please call xxx to eat" starts to be stored. When "eat" is being stored, the main voice system is enabled successfully, and at this time, the result of the determination is that the voice segment of "at 6:00 pm" is to be stored and then continues to be stored. And, the subsequent voice segment of "in xxx restaurant" may be received by the main voice system such as Siri, and after the user completes the user voice, the subsequent voice segment and/or the stored voice segment may be three voice segments of "please call xxx", "to eat at 6:00 pm" and "in xxx restaurant", the terminal main voice system first performs a telephone operation of "please call xxx", and then make a schedule of "to eat at 6:00 pm in xxx restaurant". While, as for "in xxx restaurant", it needs a mutual cooperation of ordering online, checking traffic route and so on, which cannot be completed independently by the terminal main voice system, and an operation through the internet side is necessary. Therefore, the terminal main voice system or the internet side can feedback the processing result of each voice instruction to the user in time according to the chronological order.

### Second embodiment

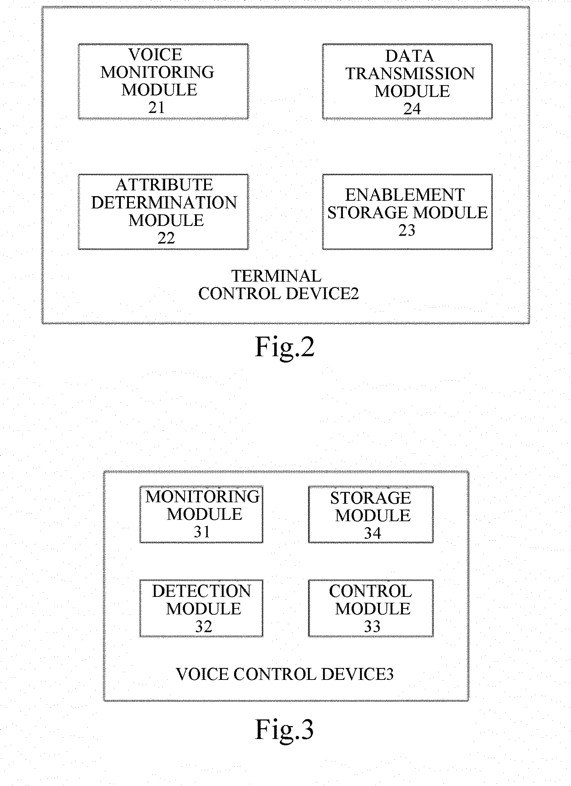

Fig. 2 is a schematic view showing functional modules of a terminal control device provided by a second embodiment of the present disclosure. In the present embodiment, as shown in Fig. 2, the terminal control device 2 provided by the present disclosure includes the following functional modules:
a voice monitoring module 21 configured to monitor a user voice including at least one voice segment when it is detected that a terminal main voice system is off;
an attribute determination module 22 configured to determine whether a voice segment having an enable attribute is present or not;
an enablement storage module 23 configured to send an enable signal for enabling the terminal main voice system and store a voice segment monitored after the voice segment having the enable attribute, if present; and
a data transmission module 24 configured to transmit the stored voice segment when it is detected that the terminal main voice system is successfully enabled.

In some embodiments, the data transmission module 24 in the embodiment shown in Fig. 2 includes: a storage control module configured to determine whether the voice segment is being stored or not when it is detected that the terminal main voice system is successfully enabled, and if yes, enabling the voice segment to be stored continuously, and after the voice segment is interrupted, terminating the storage of the subsequent voice segment, and if not, terminating the storage of the subsequent voice segment; and a transmission control module configured to transmit the subsequent voice segment and the stored voice segment after the storage of the subsequent voice segment is terminated.

### Third embodiment

Fig. 3 is a schematic view showing functional modules of a voice control device provided by a third embodiment of the present disclosure. In the present embodiment, as shown in Fig. 3, the voice control device 3 provided by the present disclosure includes a monitoring module 31, a detection module 32, a control module 33 and a storage module 34.

The monitoring module 31 is configured to monitor a user voice including at least one voice segment when it is detected that a terminal main voice system is off, and transmit the user voice to the detection module 32. In particular, the monitoring module 31 may be a device/structure having a voice receiving function such as a microphone of a terminal device, and may monitor the outside sound after the terminal has detected that the terminal main voice system is turned off.

The detection module 32 is configured to determine whether a voice segment having an enable attribute is present in the user voice monitored by the monitoring module 31, and trigger the control module 33 when the voice segment having the enable attribute is present.

The control module 33 is configured to send an enable signal for enabling the terminal main voice system when the detection module 32 is triggered, and control the storage module 34 to store a voice segment monitored after the voice segment having the enable attribute, and is further configured to control the storage module 34 to transmit the stored voice segment when it is detected that the terminal main voice system is successfully enabled. Generally, the storage module 34 transmits the stored voice segment to the terminal main voice system for processing, and if the terminal main voice system cannot process the stored voice segment independently, the stored voice segment needs to be transmitted to the network side for processing.

The storage module 34 is configured to store or transmit the voice segment under a control of the control module 33.

In some embodiments, the detection module 32 in the embodiment shown in Fig. 3 is configured to sequentially obtain a content characteristic parameter of each voice segment in the monitored user voice, and match the content characteristic parameter with a preset enable parameter, the content characteristic parameter being used for identifying a content of a voice segment; and if the content characteristic parameter of the voice segment matches the preset enable parameter, the voice segment has the enable attribute.

In some embodiments, the detection module 32 in the embodiment shown in Fig. 3 is further configured to obtain an identification parameter of each voice segment in the user voice before the control module is triggered, and compare the identification parameter with an identification parameter of a preset valid user, the identification parameter being used for identifying an identity of a speaker of a voice segment; and trigger the control module 33 only when the content characteristic parameter is matched and the compared identification parameter is valid.

In some embodiments, the control module 33 in the embodiment shown in Fig. 3 is further configured to control the storage module 34 to store the voice segment having the enable attribute before storing the voice segment monitored after the voice segment having the enable attribute.

In some embodiments, the control module 33 in the embodiment shown in Fig. 3 is further configured to determine whether the voice segment having the enable attribute has a control attribute before controlling the storage module 34 to store the voice segment having the enable attribute, and control the storage module 34 to store the voice segment having the enable attribute if yes.

In some embodiments, the control module 33 in the embodiment shown in Fig. 3 is further configured to determine whether the storage module is storing any one voice segment when it is detected that the terminal main voice system is successfully enabled; if yes, control the storage module to continue to store the voice segment, and terminate the storage of the subsequent voice segment after the voice segment is interrupted; and if not, control the storage module to terminate the storage of the subsequent voice segment; and transmit the subsequent voice segment to the terminal main voice system and control the storage module to transmit the stored voice segment to the terminal main voice system, after the storage of the subsequent voice segment is terminated.

In some embodiments, the present disclosure further provides a terminal for using the control technique provided by the present disclosure. The terminal includes a terminal main voice system and the voice control device 3 shown in Fig. 3. The voice control device 3 is configured to monitor a user voice including at least one voice segment when it is detected that a terminal main voice system is off; determine whether a voice segment having an enable attribute is present or not; enable the terminal main voice system and store a voice segment monitored after the voice segment having the enable attribute, when the voice segment having the enable attribute is present; and transmit the stored voice segment to the terminal main voice system when the terminal main voice system is enabled.

In some embodiments, the voice segment to be processed by the terminal main voice system has two sources: the voice segment stored in the voice control device and the subsequent voice segment received after the terminal main voice system is enabled, thus if the subsequent voice segment and/or the stored voice segment includes a plurality of voice segments, the terminal main voice system is configured to sequentially process the plurality of voice segments or sequentially transmit the plurality of voice segments to a network side in accordance with the monitoring sequence of each voice segment.

### Fourth embodiment

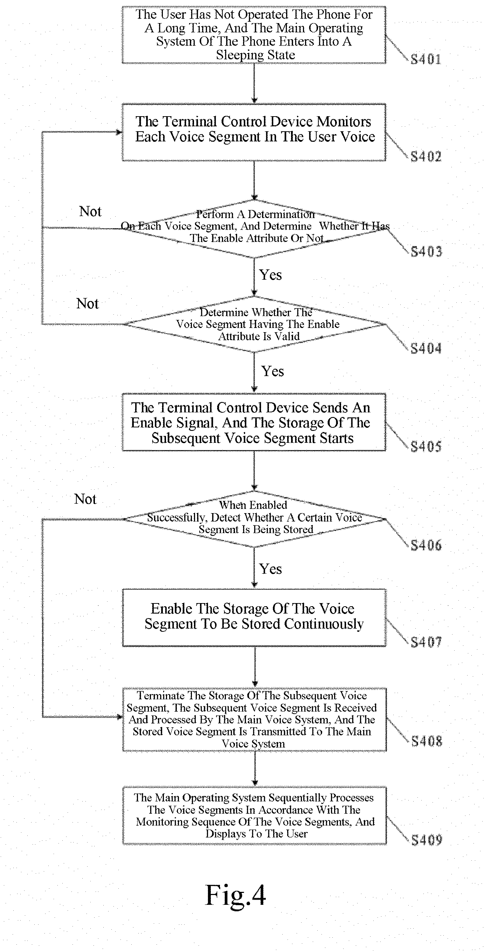

The main technical solution of the present disclosure will be described with reference to a specific application example. In the application example, it is assumed that the terminal is an iPhone 5 (the main voice system of which is IOS), the voice said by the user is "......, little A, please wait, I informed little B to dinner together; Hello little 5, please call little B and tell him to dinner at 6:00 pm in xxx restaurant". The terminal determines whether a certain voice segment has the enable attribute based on the content of the voice segment, and detects whether the user is eligible by using the voiceprint. Fig. 4 is a flowchart showing a terminal control method provided by a fourth embodiment of the present disclosure. As shown in Fig. 4, in the present embodiment, the terminal control method provided in the present disclosure includes the following steps.
S401: the user has not operated the phone for a long time, and the main operating system of the phone enters into a sleeping state.

If the user has not operated the phone for 5 minutes, the phone enters into the sleeping state automatically, and the main voice system enters into a closed state at the same time, such that a closing signal is sent to the terminal control device, and the user places the phone beside a computer.
S402: the terminal control device monitors each voice segment in the user voice.

The user communicates with little A using QQ video, such that the above dialogue occurs, and the terminal control device monitors the above dialogue.
S403: the terminal control device performs a determination on each voice segment, and determines whether it has the enable attribute or not. If yes, the process proceeds to step S404, and if not, the process returns to step S402.

The terminal performs a D/A conversion on the monitored each voice segment to obtain the content of the voice segment, and the preset enable parameter is "Hello little 5" (which is a personalized naming, thereby avoiding the general instruction such as "Hello phone" which has the hidden dangers that other users can unintentionally enable it). The result of the determination of the voice segments of "little A, please wait" and "I informed little B to dinner together" is Not, and the process returns to step S402. The result of the determination of the voice segment "Hello little 5" is Yes, and step S404 is performed.
S404: the terminal control device determines whether the voice segment having the enable attribute is valid. If yes, the process proceeds to step S405, and if not, the process returns to step S402.

It is determined that whether the voiceprint of the voice segment of "Hello little 5" is consistent with the voiceprint of the preset valid user (phone holder). If yes, the voice segment is valid, and otherwise, the voice segment is invalid.
S405: the terminal control device sends an enable signal, and the storage of the subsequent voice segment starts.

The enable signal is sent to the terminal main voice system (the enable signal is used for simultaneously wakening up the main operating system IOS and the voice system Siri), and the storage of "please call little B ......" starts.
S406: the terminal control device receives a signal of enabling successfully, and detects whether a certain voice segment is being stored. If yes, the process proceeds to step S407, and if not, the process returns to step S408.

When a signal of enabling successfully sent after the Siri voice system is successfully enabled is received, the voice segment of "at 6:00 pm" is being stored, then the process proceeds to step S407, and if not, the process returns to step S408.
S407: the terminal control device enables the storage of the voice segment to be stored continuously; and after the storage of the voice segment is completed, step S408 is performed.

Following the assumption of step S406, after the storage of "at 6:00 pm" is finished (voice interruption being greater than 0.3 seconds), step S408 is performed.
S408: the terminal control device terminates the storage of the subsequent voice segment, the subsequent voice segment is received and processed by the main voice system, and the stored voice segment is transmitted to the main voice system.

Following the assumption of step S407, the subsequent voice segment of "in xxx restaurant" is received by the main voice system such as Siri (or may be received by the main operating system such as IOS and transmitted to Siri to be processed). Meanwhile, the voice segments of "please call little B" and "at 6:00 pm" are transmitted to the terminal main voice system.
S409: the main voice system sequentially processes the voice segments in accordance with the monitoring sequence of the voice segments, and displays to the user.

The voice segments received by the main voice system in chronological order are sequentially "please call little B", "tell him to dinner at 6:00 pm" and "in xxx restaurant", and the main voice system displays to the user in cooperation with the network side.

As for "please call little B", the terminal main voice system calls the address book, and initiates a call to little B.

As for "tell him to dinner at 6:00 pm", the terminal main voice system creates a schedule of "there is an activity at 6:00 pm".

As for "in xxx restaurant", the terminal main voice system cooperates with network side to make a reservation in xxx restaurant, check the traffic route and show the reservation result and route to the user.

The present embodiment realizes the automatic enabling of the main voice system and the continuous storage of the voice segment, and only illustrates one application scenario of the present disclosure. In such application scenario, the step S406 is executed when the main voice system is successfully enabled, and in other scenarios, and the step S406 is executed when the main operating system is successfully wakened up, because the waken up of the main operating system is before the enabling of the main voice system. Thus when the main operating system is successfully wakened up, the storage of the subsequent voice segment is performed by the main operating system, which has better effect (the main operating system for receiving the stored voice segment may reduce the storage requirements for the DSP chip).

In summary, the present disclosure has at least the following advantageous effects.

When the terminal main voice system is off, the user voice including at least one voice segment is monitored continuously, and each voice segment in the user voice is detected sequentially. When the voice segment having the enable attribute is detected, an enable signal is sent to the terminal main voice system, and the voice segment monitored after the voice segment having the enable attribute is stored concurrently. After the terminal main voice system is woken up, the stored voice segment is transmitted. That is, when detecting that the terminal main voice system is off, voice detection is performed to determine whether it is necessary to enable the terminal main voice system. If it is determined as necessary, the enable signal is sent, and enabling the terminal main voice system by the voice is achieved, meanwhile, the subsequent voice segment is concurrently stored after the enable signal is sent, thus the user can issue the voice command continuously without waiting for the terminal main voice system to be enabled. Further, there is no need to worry that the terminal main voice system cannot be available by the voice command, thereby solving the complicated operation problem of the voice control technology in the prior art, and enhancing the user experience.

The foregoing are intended to be specific embodiments of the present disclosure and are not to be construed as limiting the scope of the present disclosure, and any modifications, equivalent changes, combinations or adaptations made in accordance with the technical essence of the present disclosure are still within the protection scope of the technical solution of the present disclosure.

### Industrial applicability

The above technical solutions provided in the present disclosure may be applied in a terminal control process, and particularly may be used in the following technical solution: when the terminal main voice system is off, the user voice including at least one voice segment is monitored continuously, and each voice segment in the user voice is detected sequentially; when the voice segment having the enable attribute is detected, an enable signal is sent to the terminal main voice system, and the voice segment monitored after the voice segment having the enable attribute is stored concurrently; and after the terminal main voice system is woken up, the stored voice segment is transmitted. The user can issue the voice command continuously without waiting for the terminal main voice system to be enabled. Further, there is no need to worry that the terminal main voice system cannot be available by the voice command, thereby solving the complicated operation problem of the voice control technology in the prior art, and enhancing the user experience.

## Claims

1. A terminal control method, comprising:
monitoring (S101, S402) a user voice including at least one voice segment when it is detected that a terminal main voice system is off;
determining (S102, S403) whether a voice segment having an enable attribute is present or not;
sending (S103, S405) an enable signal for enabling the terminal main voice system and storing a voice segment monitored after the voice segment having the enable attribute, if present; and
transmitting (S104, S408) the stored voice segment when it is detected that the terminal main voice system is successfully enabled,
the method further comprising:
determining (S406) whether the voice segment is being stored when it is detected that the terminal main voice system is successfully enabled, if yes, continuing (S407) to store the voice segment, and terminating (S408) the storage of the subsequent voice segment after the voice segment is interrupted for a particular predetermined amount of time; and
transmitting (S408) the subsequent voice segment and the stored voice segment after the storage of the subsequent voice segment is terminated.

2. The terminal control method of claim 1, wherein the determining (S102, S403) whether the voice segment having the enable attribute is present or not comprises: sequentially obtaining a content characteristic parameter of each voice segment in the user voice, and matching with a preset enable parameter, the content characteristic parameter being used for identifying a content of a voice segment; and if the content characteristic parameter of the voice segment matches the preset enable parameter, the voice segment has the enable attribute.

3. The terminal control method of claim 2, wherein before sending (S103, S405) the enable signal, further comprises: obtaining an identification parameter of each voice segment in the user voice, and comparing with an identification parameter of a preset valid user, the identification parameter being used for identifying an identity of a speaker of a voice segment; and sending the enable signal and storing the voice segment monitored after the voice segment having the enable attribute, only when the content characteristic parameter is matched and the compared identification parameter is valid.

4. The terminal control method of claim 1, wherein before storing (S103, S405) the voice segment monitored after the voice segment having the enable attribute, further comprises: storing the voice segment having the enable attribute.

5. The terminal control method of claim 4, wherein before storing (S103, S405) the voice segment having the enable attribute, further comprises: determining whether the voice segment having the enable attribute has a control attribute, and storing the voice segment having the enable attribute if yes.

6. A voice control device (3) comprising a monitoring module (31, 21), a detection module (32, 22), a control module (33, 23) and a storage module (34, 24), wherein,
the monitoring module (31, 21) is configured to monitor a user voice including at least one voice segment when it is detected that a terminal main voice system is off, and transmit the user voice to the detection module;
the detection module (32, 22) is configured to determine whether a voice segment having an enable attribute is present in the user voice monitored by the monitoring module, and trigger the control module when the voice segment having the enable attribute is present;
the control module (33, 23) is configured to send an enable signal for enabling the terminal main voice system when the detection module is triggered, and control the storage module to store a voice segment monitored after the voice segment having the enable attribute, and is further configured to control the storage module to transmit the stored voice segment when it is detected that the terminal main voice system is successfully enabled; and
the storage module (34, 24) is configured to store or transmit the voice segment under a control of the control module,
wherein the control module (33) is further configured to: determine whether the storage module is storing any one voice segment when it is detected that the terminal main voice system is successfully enabled; if yes, control the storage module (34) to continue to store the voice segment, and terminate the storage of the subsequent voice segment after the voice segment is interrupted for a particular predetermined amount of time; and transmit the subsequent voice segment and the stored voice segment after the storage of the subsequent voice segment is terminated, and control the storage module to transmit the stored voice segment.

7. The voice control device of claim 6, wherein the detection module (32) is configured to sequentially obtain a content characteristic parameter of each voice segment in the monitored user voice, and match the content characteristic parameter with a preset enable parameter, the content characteristic parameter being used for identifying a content of a voice segment; and if the content characteristic parameter of the voice segment matches the preset enable parameter, the voice segment has the enable attribute.

8. The voice control device of claim 7, wherein the detection module (32) is further configured to obtain an identification parameter of each voice segment in the user voice before the control module is triggered, and compare the identification parameter with an identification parameter of a preset valid user, the identification parameter being used for identifying an identity of a speaker of a voice segment; and trigger the control module only when the content characteristic parameter is matched and the compared identification parameter is valid.

9. The voice control device of claim 6, wherein the control module (33) is further configured to control the storage module to store the voice segment having the enable attribute before storing the voice segment monitored after the voice segment having the enable attribute.

10. The voice control device of claim 9, wherein the control module (33) is further configured to determine whether the voice segment having the enable attribute has a control attribute before controlling the storage module to store the voice segment having the enable attribute, and control the storage module to store the voice segment having the enable attribute if yes.

## Patentansprüche

1. Verfahren zur Steuerung von Endgeräten, das Folgendes umfasst:
Überwachen (S101, S402) einer Benutzerstimme mit mindestens einem Sprachsegment, wenn erkannt wird, dass ein Hauptsprachsystem des Endgeräts ausgeschaltet ist;
Bestimmen (S102, S403), ob ein Sprachsegment mit einem Freigabeattribut vorhanden ist oder nicht;
Senden (S103, S405) eines Freigabesignals zur Freigabe des Hauptsprachsystems des Endgeräts und Speichern eines Sprachsegments, das nach dem Freigeben des Sprachsegments mit dem Enable-Attribut, falls vorhanden, überwacht wird; und
Senden (S104, S408) des gespeicherten Sprachsegments, wenn festgestellt wird, dass das Hauptsprachsystem des Endgeräts erfolgreich aktiviert wurde, wobei das Verfahren ferner Folgendes umfasst:
Bestimmen (S406), ob das Sprachsegment gespeichert wird, wenn erkannt wird, dass das Hauptsprachsystem des Endgeräts erfolgreich aktiviert ist, wenn ja, Fortsetzen (S407) des Speicherns des Sprachsegments, und Beenden (S408) des Speicherns des nachfolgenden Sprachsegments, nachdem das Sprachsegment für eine bestimmte vorbestimmte Zeitdauer unterbrochen wurde; und
Senden (S408) des nachfolgenden Sprachsegments und des gespeicherten Sprachsegments, nachdem das Speichern des nachfolgenden Sprachsegments beendet wurde.

2. Verfahren zur Steuerung von Endgeräten nach Anspruch 1, wobei das Bestimmen (S102, S403), ob das Sprachsegment mit dem Aktivierungsattribut vorhanden ist oder nicht, sequentielles Erhalten eines Inhaltsmerkmalparameters jedes Sprachsegments in der Benutzerstimme und Abgleichen mit einem voreingestellten Freigabeparameter, wobei der Inhaltsmerkmalparameter zum Identifizieren eines Inhalts eines Sprachsegments verwendet wird; und, wenn der Inhaltsmerkmalparameter des Sprachsegments mit dem voreingestellten Freigabeparameter übereinstimmt, das Sprachsegment das Freigabeattribut hat.

3. Verfahren zur Steuerung von Endgeräten nach Anspruch 2, wobei vor dem Senden (S103, S405) des Freigabesignals ferner Folgendes umfasst: Erhalten eines Identifikationsparameters jedes Sprachsegments in der Benutzerstimme und Vergleichen mit einem Identifikationsparameters eines voreingestellten gültigen Benutzers, wobei der Identifikationsparameter zum Identifizieren einer Identität eines Sprechers eines Sprachsegments verwendet wird; und Senden des Freigabesignals und Speichern des überwachten Sprachsegments nach dem Sprachsegment mit dem Freigabeattribut nur dann, wenn der Inhaltsmerkmalparameter übereinstimmt und der verglichene Identifikationsparameter gültig ist.

4. Verfahren zur Steuerung von Endgeräten nach Anspruch 1, wobei vor dem Speichern (S103, S405) des Sprachsegments, das nach dem Sprachsegment mit dem Aktivierungsattribut überwacht wird, ferner Folgendes umfasst: Speichern des Sprachsegments mit dem Aktivierungsattribut.

5. Verfahren zur Steuerung von Endgeräten nach Anspruch 4, wobei das Sprachsegment mit dem Aktivierungsattribut vor dem Speichern (S103, S405) ferner Folgendes umfasst:
Bestimmen, ob das Sprachsegment mit dem Freigabeattribut ein Kontrollattribut aufweist und Speichern des Sprachsegments mit dem Freigabeattribut, wenn ja.

6. Vorrichtung zur Sprachsteuerung (3) mit einem Überwachungsmodul (31, 21), einem Erkennungsmodul (32, 22), einem Steuermodul (33, 23) und einem Speichermodul (34, 24), wobei:
das Überwachungsmodul (31, 21) so konfiguriert ist, dass es eine Benutzerstimme mit mindestens einem Sprachsegment überwacht, wenn festgestellt wird, dass ein Endgerät-Hauptsprachsystem ausgeschaltet ist, und die Benutzerstimme an das Erfassungsmodul überträgt;
das Erkennungsmodul (32, 22) konfiguriert ist zum Bestimmen, ob ein Sprachsegment mit einem Aktivierungsattribut in der vom Überwachungsmodul überwachten Benutzerstimme vorhanden ist, und das Steuermodul triggert, wenn das Sprachsegment mit dem Freigabeattribut vorhanden ist;
das Steuermodul (33, 23) konfiguriert ist, ein Freigabesignal zu senden, um das Hauptsprachsystem des Endgeräts zu aktivieren, wenn das Erkennungsmodul ausgelöst wird, und das Speichermodul zu steuern, um ein überwachtes Sprachsegment nach dem Sprachsegment mit dem Freigabeattribut zu speichern und ferner konfiguriert ist, dass es das Speichermodul steuert, um das gespeicherte Sprachsegment zu übertragen, wenn festgestellt wird, dass das Hauptsprachsystem des Endgeräts erfolgreich aktiviert ist; und
das Speichermodul (34, 24) konfiguriert ist, um das Sprachsegment unter einer Steuerung des Steuermoduls zu speichern oder zu übertragen,
wobei das Steuermodul (33) ferner zum Bestimmen konfiguriert ist, ob das Speichermodul irgendein Sprachsegment speichert, wenn festgestellt wird, dass das Hauptsprachsystem des Endgeräts erfolgreich aktiviert ist; wenn ja, das Speichermodul (34) zu steuern, um das Sprachsegment ferner zu speichern, und die Speicherung des nachfolgenden Sprachsegments zu beenden, nachdem das Sprachsegment für eine bestimmte vorbestimmte Menge an Zeit unterbrochen wurde; und Senden des nachfolgenden Sprachsegments und des gespeicherten Sprachsegments, nachdem die Speicherung des nachfolgenden Sprachsegments beendet wurde, und Steuern des Speichermoduls zum Übertragen des gespeicherten Sprachsegments.

7. Vorrichtung zur Sprachsteuerung nach Anspruch 6, wobei das Erkennungsmodul (32) konfiguriert ist, um sequentiell einen Inhaltsmerkmalparameter jedes Sprachsegments in der überwachten Benutzerstimme zu erhalten und den Inhaltsmerkmalparameter mit einem voreingestellten Freigabeparameter abzugleichen, wobei der Inhaltsmerkmalparameter zum Identifizieren eines Inhalts eines Sprachsegments verwendet wird, und, wenn der Inhaltsparameter des Sprachsegments mit dem voreingestellten Freigabeparameter übereinstimmt, das Sprachsegment den Freigabeattribut aufweist.

8. Vorrichtung zur Sprachsteuerung nach Anspruch 7, wobei das Erkennungsmodul (32) ferner konfiguriert ist, dass es einen Identifikationsparameter jedes Sprachsegments in der Benutzerstimme erhält, bevor das Steuermodul ausgelöst wird, und den Identifikationsparameter mit einem Identifikationsparameter eines voreingestellten gültigen Benutzers vergleicht, wobei der Identifikationsparameter zum Identifizieren einer Identität eines Sprechers eines Sprachsegments verwendet wird, und das Steuermodul nur dann ausgelöst wird, wenn der Inhaltmerkmalsparameter übereinstimmt und der verglichene Identifikationsparameter gültig ist.

9. Vorrichtung zur Sprachsteuerung nach Anspruch 6, wobei das Steuermodul (33) ferner konfiguriert ist zum Steuern des Speichermoduls, um das Sprachsegment mit dem Aktivierungsattribut zu speichern, bevor das Sprachsegment gespeichert wird, das nach dem Sprachsegment mit dem Aktivierungsattribut überwacht wird.

10. Vorrichtung zur Sprachsteuerung nach Anspruch 9, wobei das Steuermodul (33) ferner konfiguriert ist zum Bestimmen, ob das Sprachsegment mit dem Aktivierungsattribut ein Steuerattribut hat, bevor es das Speichermodul steuert, um das Sprachsegment mit dem Aktivierungsattribut zu speichern, und das Speichermodul steuert, um das Sprachsegment mit dem Aktivierungsattribut zu speichern, wenn ja.

## Revendications

1. Procédé de commande de terminal comprenant :
la surveillance (S101, S402) d'une voix d'utilisateur comprenant au moins un segment vocal lorsqu'il est détecté qu'un système vocal du terminal principal est désactivé ;
la détermination (S102, S403) si un segment vocal présentant un attribut d'activation est présent ou non ;
l'envoi (S103, S405) d'un signal d'activation destiné à activer le système vocal du terminal principal et à mémoriser un segment vocal surveillé après le segment vocal présentant l'attribut d'activation s'il est présent ; et
la transmission (S104, S408) du segment vocal mémorisé lorsqu'il est détecté que le système vocal du terminal principal est activé avec succès,
le procédé comprenant en outre :
la détermination (S406) si le segment vocal est en cours de mémorisation lorsqu'il est détecté que le système vocal du terminal principal est activé avec succès, si oui, la continuation (S407) pour mémoriser le segment vocal et la terminaison (S408) de la mémorisation du segment vocal ultérieur après que le segment vocal a été interrompu pendant une durée prédéfinie ; et
la transmission (S408) du segment vocal ultérieur et du segment vocal mémorisé une fois que la mémorisation du segment vocal ultérieur est terminée.

2. Procédé de commande de terminal selon la revendication 1, le fait de déterminer (S102, S403) si le segment vocal présentant l'attribut d'activation est présent ou non comprenant : l'obtention de façon séquentielle d'un paramètre de caractéristique de contenu de chaque segment vocal dans la voix d'utilisateur et la mise en correspondance avec un paramètre d'activation prédéfini, le paramètre de caractéristique de contenu servant à identifier un contenu d'un segment vocal ; et si le paramètre de caractéristique de contenu du segment vocal correspond au paramètre d'activation prédéfini, le segment vocal présente l'attribut d'activation.

3. Procédé de commande de terminal selon la revendication 2, qui comprend en outre, avant l'envoi (S103, S405) du signal d'activation : l'obtention d'un paramètre d'identification de chaque segment vocal dans la voix d'utilisateur et la comparaison avec un paramètre d'identification d'un utilisateur valide prédéfini, le paramètre d'identification servant à identifier une identité d'un locuteur d'un segment vocal ; et l'envoi du signal d'activation et la mémorisation du segment vocal surveillé après le segment vocal présentant l'attribut d'activation, uniquement lorsque le paramètre de caractéristique de contenu correspond et que le paramètre d'identification comparé est valide.

4. Procédé de commande de terminal selon la revendication 1 qui, avant la mémorisation (S103, S405) du segment vocal surveillé après le segment vocal présentant l'attribut d'activation, comprend en outre : la mémorisation du segment vocal présentant l'attribut d'activation.

5. Procédé de commande de terminal selon la revendication 4 qui, avant la mémorisation (S103, S405) du segment vocal présentant l'attribut d'activation, comprend en outre : le fait de déterminer si le segment vocal présentant l'attribut d'activation comporte un attribut de commande et si oui, la mémorisation du segment vocal présentant l'attribut d'activation.

6. Dispositif de commande vocale (3), comprenant un module de surveillance (31, 21), un module de détection (32, 22), un module de commande (33, 23) et un module de mémorisation (34, 24) dans lequel,
le module de surveillance (31, 21) est configuré pour surveiller une voix d'utilisateur comprenant au moins un segment vocal, lorsqu'il est détecté qu'un système vocal du terminal principal est désactivé, et pour transmettre la voix d'utilisateur au module de détection ;
le module de détection (32, 22) est configuré pour déterminer si un segment vocal présentant un attribut d'activation est présent dans la voix d'utilisateur surveillée par le module de surveillance et pour déclencher le module de contrôle lorsque le segment vocal présentant l'attribut d'activation est présent ;
le module de commande (33, 23) est configuré pour envoyer un signal destiné à activer le système vocal du terminal principal, lorsque le module de détection est déclenché, et pour commander le module de mémorisation pour mémoriser un segment vocal surveillé, après le segment vocal présentant l'attribut d'activation, et est configuré en outre pour commander le module de mémorisation pour transmettre le segment vocal mémorisé, lorsqu'il est détecté que le système vocal du terminal principal est activé avec succès ; et
le module de mémorisation (34, 24) est configuré pour mémoriser ou pour transmettre le segment vocal par le biais d'une commande du module de commande,
le module de commande (33) étant en outre configuré pour : déterminer si le module de mémorisation est en train de mémoriser un quelconque segment vocal lorsqu'il est détecté que le système vocal du terminal principal est activé avec succès ; si oui, pour commander le module de mémorisation (34) pour continuer à mémoriser le segment vocal et pour terminer la mémorisation du segment vocal ultérieur après que le segment vocal a été interrompu pendant une durée prédéfinie ; et pour transmettre le segment vocal ultérieur et le segment vocal mémorisé une fois que la mémorisation du segment vocal ultérieur est terminée, et pour commander le module de mémorisation pour transmettre le segment vocal mémorisé.

7. Dispositif de commande vocale selon la revendication 6, dans lequel le module de détection (32) est configuré pour obtenir de façon séquentielle un paramètre de caractéristique de contenu de chaque segment vocal dans la voix d'utilisateur surveillé, et pour mettre en correspondance le paramètre de caractéristique de contenu avec un paramètre d'activation prédéfini, le paramètre de caractéristique de contenu étant destiné à identifier un contenu d'un segment vocal ; et si le paramètre de caractéristique de contenu du segment vocal correspond au paramètre d'activation prédéfini, le segment vocal présente l'attribut d'activation.

8. Dispositif de commande vocale selon la revendication 7, dans lequel le module de détection (32) est configuré en outre pour obtenir un paramètre d'identification de chaque segment vocal dans la voix d'utilisateur, avant que le module de commande ne soit déclenché, et pour comparer le paramètre d'identification à un paramètre d'identification d'un utilisateur valide prédéfini, le paramètre d'identification étant destiné à identifier une identité d'un locuteur d'un segment vocal ; et pour déclencher le module de commande uniquement lorsque le paramètre de caractéristique de contenu correspond et que le paramètre d'identification comparé est valide.

9. Dispositif de commande vocale selon la revendication 6, dans lequel le module de commande (33) est configuré en outre pour commander le module de mémorisation pour mémoriser le segment vocal présentant l'attribut d'activation avant la mémorisation du segment vocal surveillé, après le segment vocal présentant l'attribut d'activation.

10. Dispositif de commande vocale selon la revendication 9, dans lequel le module de commande (33) est en outre configuré pour déterminer si le segment vocal présentant l'attribut d'activation présente un attribut de commande avant de commander au module de mémorisation de mémoriser le segment vocal présentant l'attribut d'activation et si oui, pour commander au module de mémorisation de mémoriser le segment vocal présentant l'attribut d'activation.
